# EUROPEAN PATENT APPLICATION

(11) **EP 1 249 806 A2**
(43) Date of publication of application: **16.10.2002**
(21) Application number: 02076974.1
(22) Date of filing: 17.03.1999
(51) Int. Cl.: G08B 13/22, G08B 25/08

(54) **Monitoring system**

(30) Priority: 17.03.1998 GB 9805556
(62) Divisional of application: 99909087.1
(71) Applicant: Ascot Management Solution Limited, Ramsey, Isle of Man IM8 1JS (GB)
(72) Inventor: Gordon, David Hyman, Newton Mearns, Glasgow G77 5DX (GB)
(74) Representative: Lees, Kate Jane

(57) **Abstract**

A remote monitoring system comprising a signal emitter (10) providing a signal, means (12) for detecting the signal, means (16) for transmitting the signal via a global specification for mobile telephones (GSM) network, and remote means (18) for receiving the transmitted signal, the remote monitoring system being characterised in that the signal is transmitted via a short message server (SMS) of the GSM network.

## Description

This invention concerns monitoring systems, particularly but not exclusively alarm systems.

Protection of void properties from intruders or other hazards, such as fire and flooding, presents a number of difficulties. Void properties may not have a working electrical power supply for powering alarm devices. Audible or visual alarm signals themselves are not responded to because of remoteness of the property and reliance on patrolling security personnel, who may have several properties to supervise. Thus, response time to an alarm signal may be overlong.

It is possible to arrange for an alarm system to send a radio signal to a radio receiver, which is programmed to relay the signal to a central monitoring unit which has to notify personnel to investigate the source of the alarm signal. Delays can, therefore, result in call out. Another disadvantage is having to set up and maintain local receivers and a central radio monitoring unit to monitor alarm signals and arrange call outs.

Utility meters, such as for water, gas and electricity supplies have to be read directly periodically in order to assess charges. However, if access to a meter is not possible when the meter reader calls, an estimated charge is made, which can lead to incorrect charging, if the meter is not read for sometime. It would, therefore, be advantageous to read such meters remotely.

WO-A-93 16452 and WO-A-89 05553 each disclose a remote monitoring system comprising a signal emitter providing a signal, means for detecting the signal, means for transmitting the signal via a global specification for mobile telephones network, and remote means for receiving the transmitted signal.

An object of this invention is to provide an improved remote monitoring system, which may be used for security purposes or for remote monitoring of other signal emitting systems.

According to this invention there is provided a remote monitoring system comprising a signal emitter providing a signal, means for detecting the signal, means for transmitting the signal via a global specification for mobile telephones (GSM) network, and remote means for receiving the transmitted signal, the remote monitoring system being characterised in that the signal is transmitted via a short message server (SMS) of the GSM network.

As well as transmitting signals, the system of the invention may further comprise means for receiving a signal from a remote source for controlling a function, such as for controlling an appliance, device or other system operatively coupled to the monitoring system. An example of a function to be controlled might be a central heating system, whereby the central heating system could be switched on or off.

Signal transmission to and from the remote monitoring system of the invention is preferably via a short message server of the GSM network.

In one preferred embodiment of the invention, the signal emitter is an alarm situation detector, such as, for example, an intruder alarm indicator, a fire alarm or a smoke detector.

Typically useful intruder alarm indicators for use with the present invention include passive infra red detectors (PIR), pressure pads and contact switches on doors or opening windows.

The monitoring system of the invention may be used to read utility meters, wherein the signal emitter is a utility meter, such as an electricity supply meter, a gas supply meter or a water supply meter. For convenience, the meter dial can be viewed by a radio camera and the reading transmitted via the GSM.

The monitoring system of the invention can send its signals to a telephone via the GSM but it is preferred that the system further comprise at a remote location a modem for receiving the transmitted signal and a computer programmed to store the signal received and optionally to instigate a response thereto.

The computer is preferably programmed to interrogate the signal emitter remotely randomly or at predetermined intervals.

When the monitoring system includes means for receiving a signal from a remote source for controlling a function, the function to be controlled may be re-setting of the signal detector or operation of household appliance. In the case of the latter the function of the household appliance may be controlled by a control signal transmitted via radio or hard wiring to the household appliance.

The computer is preferably programmed for remote operation via a GSM telephone using voice or digital signals, whereby a monitor of the system such as a security guard, householder, warden or the like may control functions connected to the monitoring system or interrogate the system.

The signal transmitting means preferably has battery power back-up. Operation of the battery power back-up preferably activates a signal transmission to the transmitted signal receiving means. Preferably, the monitoring system of the invention has means for sending a message to a designated receiver upon receipt of said battery power back-up signal. The designated receiver may be a telephone and the message may be a pre-recorded voice message.

Whilst the monitoring system of the invention has primary application in the security industry sector, it may have application in a variety of other sectors instead of or additional to the security sector. Other sectors of interest include utility meter reading, remote power control and image transfer. The system of the invention aims to make use of a GSM mobile telephone in SMS and data transfer format. Information to and from a remote signalling unit may be sent and received via a call centre or directly to a GSM mobile telephone.

According to another aspect of this invention provided an alarm system comprising an alarm situation detector arranged to pass a signal of an alarm situation to a telephone dialler for contacting a designated telephone number.

The designated telephone number may be of a telephone handset or of a computer modem. Thus, the signal of an alarm situation can be passed directly to the telephone of a responsible person for responding to the alarm situation or to a computer at a monitoring centre.

The alarm situation detector is ideally a remote item that is preferably battery powered rather than being hard-wired to mains power. Suitable long-life batteries will be used but provision may be made for automatic dialling to the designated telephone number when battery power reaches a predetermined low level.

The alarm system of the invention preferably retains a pre-recorded message or signal for transmission to the designated telephone or computer. The pre-recorded message or signal may indicate the source of the alarm and possibly also the nature of the alarm situation. For a system using analogue signalling it may be convenient for the pre-recorded message to be an audible message e.g. "Movement detected at alarm No. X". For a system using digital signalling the message may be of an encoded form for transmission to a computer modem for display on computer monitor. The signal may be the telephone number of the dialler itself, which will include the source of the alarm signal.

The alarm situation detector may be of any suitable type. Ideally for void properties passive infra red presence detection will be used, although pressure mats, door contacts and the like may also be used. Additional smoke alarms, fire detectors and water detectors (for detecting flooding) are also possible types of alarm situation detectors suitable for the present invention.

The alarm system of the invention preferably includes means for delaying activation thereof for exit and entry purposes from and to an alarmed property.

Preferably the alarm system of the invention can be switched off remotely from the designated telephone handset, for example by keying in a single character or combination of characters.

The alarm system of the invention may also include an audible and/or visual alarm signals on detection of an alarm situation.

In a preferred embodiment of the invention an alarm system suitable for use in a void property comprises one or more battery powered passive infra red presence detectors with means for transmitting a radio signal to a remote radio receiver, ideally situated in the same property, a dialler programmed to dial up a predetermined telephone number and means for activating the dialler on receipt of a signal by the remote radio receiver.

The radio receiver and dialler are preferably provided in a stand alone container with its own battery for power supply.

This invention will now be further described, by way of example only, with reference to the accompanying drawings in which:
Figure 1 shows schematically an alarm system according to the invention;
Figure 2 shows schematically a second embodiment of the invention;
Figure 3 shows schematically a third embodiment of the invention; and
Figure 4 shows schematically a fourth embodiment of the invention.

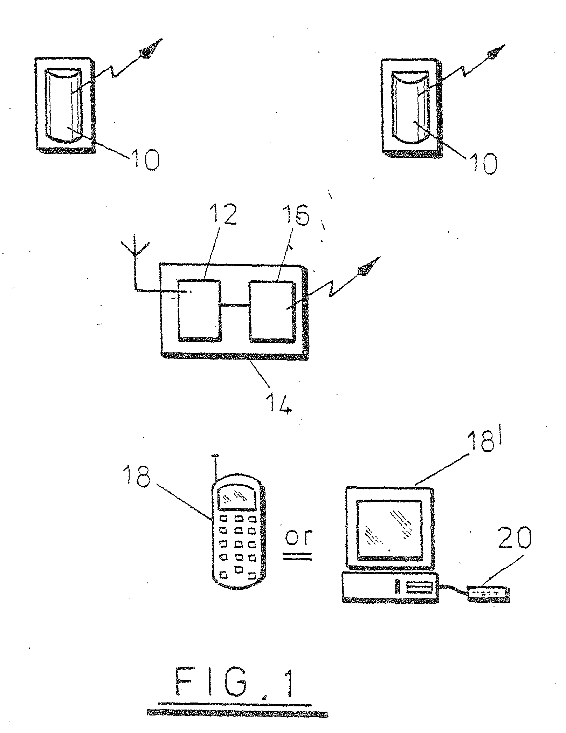

Referring to Figure 1 of the accompanying drawing one or more passive infra red presence detectors 10 are sited in appropriate positions in a void property in order to detect an unwanted presence, such as of an intruder. It is to be understood that other types of detectors may be used instead, whether to detect intruders or some other hazardous condition, such as fire or flooding. The detectors 10 are battery powered and have in built radio transmitters for sending a radio signal on detection of a presence to a radio receiver 12, itself battery powered and located in a control box 14. The radio receiver sends a signal to a pre-programmed dialler 16 which on receipt of a signal dials up a predetermined telephone number. The telephone that is dialled up may be a cellular phone 18 that is carried by security personnel which means that attendance at the void property can be prompt because the alarm signal comes direct to the responsible person. Alternatively the telephone number dialled up may be that of a computer modem 20 of a control centre computer 18'. The computer may be monitored physically or may be programmed to transmit instructions to appropriate personnel for responding to the alarm situation.

The dialler is arranged to transmit a pre-recorded message which indicates the source of the alarm signal or in the case of digital dialler the number of the dialler may be automatically transmitted as or as part of the signal.

Timer delay circuitry is included in the control box, so that entry to and exit from the property by authorised personnel who are setting or checking the alarm system will not activate the alarm.

The dialler is also arranged to dial up the designated telephone when the battery power reaches a pre-determined low, so that the battery can be replaced before it runs out of power.

The alarm system is simple to install requiring simply the siting of the passive infra red presence detectors (or other alarm condition detectors) appropriately, siting the control box elsewhere probably concealed, inputting the designated telephone number and setting the alarm.

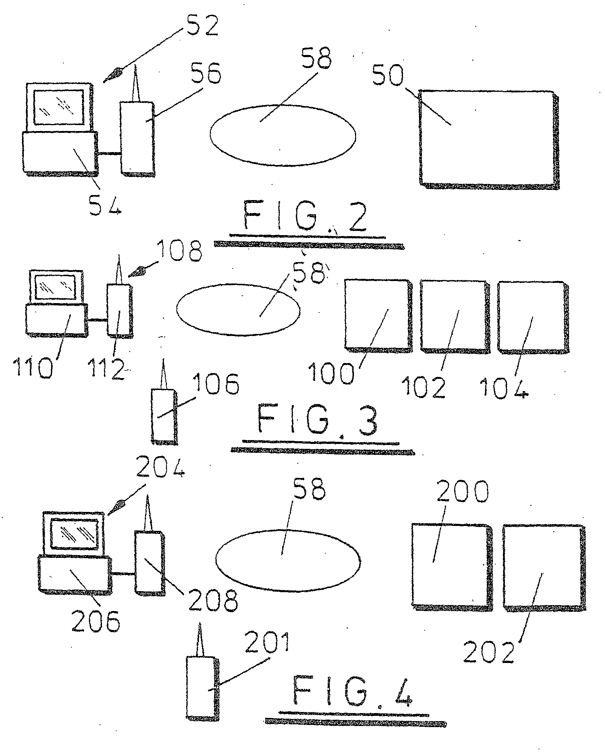

Turning to Figure 2 of the accompanying drawings, a remote system for vacated properties consists of a secure enclosure 50 which houses a lead acid battery for system power, a PIR for intruder detection, an external connection for auxiliary alarms, an interface and control circuit for detecting the alarms and subsequently changing the information into data and also a GSM mobile phone with a method of data connection.

Information from the secure enclosure is transmitted to a host site 52 comprising a PC (computer) 54 connected to a GSM modem unit 56. Information from the alarm system is transmitted using a GSM mobile telephone in SMS and data transfer format via an SMS network server 58. This gives the facility of being able to detect the status of the remote systems and display the information to a call manager or subsequently create test calls to the remote systems and also auxiliary calls to wardens or security personnel.

Figure 3 shows a system for residences. The system includes a security facility 100 (similar to 50 in Figure 2), a remote control module 102 and a remote meter reading module 104. The basis of the system would provide a customer with a security facility connected to a central station and the added advantage of instant intruder reporting via this facility using the SMS service to the users GSM mobile. The intruder detection and set/reset functions are handled over a 2 wire line called a Microlan. This uses unique addresses for all devices on the lan and can either detect the presence or removal of a device and can also switch devices on the Ian to toggle lights or heating controls on and off. This gives the added advantage of, for example, remote heating control over the same system with additional modules fitted with remote control from a standard GSM phone 106.

It will have the further addition of remote meter reading to enable the utility supplier to instantly read any meter on demand. The meter reading can be performed in two ways, namely by image capture or by extracting the information from the IR port on the meter front panel. This could be taken a stage further by providing the utility supplier with the facility of either shutting down or altering the tariff of the supply which often requires a site visit from an engineer to alter via the IR port.

As with other versions the host site 108 comprises of a PC 110 running a custom software package and with connection to a GSM modem unit 112. This gives the facility of being able to detect the status of the remote systems and display the information to a central manager.

All standard alarm and status transfers, including sending remote control information to the domestic base, will use the network SMS facility with any image information for intruders or meter reading being sent by data format.

Finally, Figure 4 of the accompanying drawings shows another residential system. The basis of the system is to provide, for example, Local Authority customers with a security facility 200 connected to a central station which could in turn alert a local warden or security officer by SMS to a GSM telephone 201.

The system will also have remote meter reading 202 as described for the embodiment of Figure 3.

As with the other versions the host site 204 comprises a PC 206 running a custom software package and with connection to a GSM modem unit 208. This gives the facility of being able to detect the status of the remote systems and display the information to a central manager. All standard alarm and status transfers will use the network SMS facility with any image information for intruders or meter reading being sent by data format.

## Claims

1. A remote monitoring system comprising a signal emitter (10) providing a signal, means (12) for detecting the signal, means (16) for transmitting the signal via a global specification for mobile telephones (GSM) network, and remote means (18) for receiving the transmitted signal, the remote monitoring system being **characterised in that** the signal is transmitted via a short message server (SMS) of the GSM network.

2. A remote monitoring system as claimed in claim 1 further comprising means (104) for receiving a signal from a remote source for controlling a function.

3. A remote monitoring system as claimed in claims 1 or 2, wherein the signal emitter (10) is an alarm situation detector.

4. A remote monitoring system as claimed in claim 3, wherein the alarm situation detector is an intruder alarm indicator.

5. A remote monitoring system as claimed in claim 4, wherein the intruder alarm indicator is a passive infra red detector (PIR).

6. A remote monitoring system as claimed in claim 4, wherein the intruder alarm indicator is a pressure pad.

7. A remote monitoring system as claimed in claim 4, wherein the intruder alarm indicator is a contact switch on a door or opening window.

8. A remote monitoring system as claimed in claim 3, wherein the alarm situation detector is a fire and/or smoke alarm.

9. A remote monitoring system as claimed in claims 1 or 2, wherein the signal emitter (10) is a utility meter.

10. A remote monitoring system as claimed in claim 9, wherein the meter is an electricity supply meter, a gas supply meter or a water supply meter.

11. A remote monitoring system as claimed in claim 9 or 10, further comprising a radio camera for reading the meter dial and transmitting the reading via the GSM.

12. A remote monitoring system as claimed in any one of claims 1 to 11, further comprising a modem (20) for receiving the transmitted signal and a computer (18') programmed to store the signal received and optionally to instigate a response thereto.

13. A remote monitoring system as claimed in any one of claims 1 to 12 including means for interrogating remotely randomly or at predetermined intervals the signal emitter (10).

14. A remote monitoring system as claimed in any one of claims 2 to 13, wherein the function to be controlled is re-setting of the signal detector (10).

15. A remote monitoring system as claimed in any one of claims 2 to 13, wherein a function to be controlled is operation of household appliance.

16. A remote monitoring system as claimed in claim 15, wherein the control signal is transmitted via radio or hard wiring to the household appliance.

17. A remote monitoring system as claimed in any one of claims 12 to 16, wherein the computer (18') is programmed for remote control via a GSM telephone using voice or digital signals.

18. A remote monitoring system as claimed in any one of claims 1 to 17, having a battery power back-up for the signal transmitting means (16).

19. A remote monitoring system as claimed in claim 18, wherein operation of the battery power back-up activates a signal transmission to the transmitted signal receiving means (16).

20. A remote monitoring system as claimed in claim 19 having means for sending a message to a designated receiver upon receipt of said battery power back-up signal.

21. A remote monitoring system as claimed in claim 20, wherein the designated receiver is a telephone and the message is a prerecorded signal.
